(19) Europäisches Patentamt
European Patent Office
Office européen des brevets

(11) Veröffentlichungsnummer: **0 327 795 B1**

(12) # EUROPÄISCHE PATENTSCHRIFT

(45) Veröffentlichungstag der Patentschrift: **01.09.93**

(51) Int. Cl.5: **C08G 77/54**, C08G 77/58, B01J 20/00

(21) Anmeldenummer: **89100079.6**

(22) Anmeldetag: **04.01.89**

Die Akte enthält technische Angaben, die nach dem Eingang der Anmeldung eingereicht wurden und die nicht in dieser Patentschrift enthalten sind.

(54) **Geformte polymere tertiäre oder sekundäre Organosiloxanaminverbindungen, Verfahren zu ihrer Herstellung und Verwendung.**

(30) Priorität: **12.01.88 DE 3800563**

(43) Veröffentlichungstag der Anmeldung: **16.08.89 Patentblatt 89/33**

(45) Bekanntmachung des Hinweises auf die Patenterteilung: **01.09.93 Patentblatt 93/35**

(84) Benannte Vertragsstaaten: **AT BE CH DE ES FR GB IT LI LU NL**

(56) Entgegenhaltungen:
**DE-A- 2 155 281**
**DE-A- 2 357 184**
**DE-A- 3 120 214**

(73) Patentinhaber: **Degussa Aktiengesellschaft**
**Weissfrauenstrasse 9**
**D-60311 Frankturt(DE)**

(72) Erfinder: **Panster, Peter, Dr.**
**Im Lochseif 8**
**D-6458 Rodenbach(DE)**
Erfinder: **Kleinschmit, Peter, Dr.**
**Wildaustrasse 19**
**D-6450 Hanau 9(DE)**

EP 0 327 795 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind geformte polymere tertiäre oder sekundäre Organosiloxanaminverbindungen, die gegenüber bereits bekannten polymeren Organosiloxanaminverbindungen die verfahrens- sowie anwendungstechnischen Vorteile der Kugelform haben. Gleichzeitig werden Verfahrensmaßnahmen angegeben, nach denen die neuen Produkte nicht nur in der für die jeweilige Anwendung idealen Kugelgröße, sondern auch mit geeigneten physikalischen Eigenschaften hergestellt werden können. Ein weiterer Gegenstand der Erfindung betrifft die Verwendung der geformten Organosiloxanaminverbindungen.

In der DE-A-31 20 214 sind unlösliche polymere, gegebenenfalls vernetzte, tertiäre oder sekundäre Organosiloxanamine beschrieben, die z.B. als schwach basische Ionenaustauscher, als Adsorber, als Wirkstoffträger, als Träger heterogenisierter homogener Katalysatoren oder als heterogene Basen in basenkatalysierten Reaktionen eingesetzt werden können. Diese polymeren Stoffe besitzen gegenüber polymeren Aminen auf rein organischer Basis, wie sie z. B. in der EP-A-0 014 225 beschrieben sind, eine höhere mechanische, thermische und chemische Stabilität und ihre physikalischen Eigenschaften sind wesentlich unabhängiger gegenüber äußeren Einflüssen, wie Druck, Temperatur sowie flüssigen und gasförmigen Medien.

Im Vergleich zu heterogenen Aminbasen, wie sie durch Funktionalisierung von anorganischen Polymerträgern, wie Kieselsäure, mit Aminoalkyl(alkoxi)silanen erhältlich sind (GB-A-1 506 226), weisen die polymeren Organosiloxanaminverbindungen vor allem eine wesentlich höhere Aminkapazität auf. Die Matrix dieser Produkte läßt sich "maßgeschneidert" herstellen, z.B. in bezug auf den für eine Verwendung als Katalysatorträger wichtigen Aspekt, daß die Amindichte durch den Einbau von Silicium, Titan, Zirkonium und Aluminium enthaltenden Vernetzern gesteuert werden kann.

Insgesamt handelt es sich somit um Produkt, die sich chemisch in idealer Weise modifizieren lassen, um den vorstehend beschriebenen vielfältigen Anwendungen angepaßt zu werden. Aus anwandungstechnischer Sicht erschienen sie jedoch insoweit verbesserungsbedürftig, als sie bislang nur in stückiger oder pulvriger Form und nicht in den für viele Einsatzgebiete verlangten, weil günstigeren Kugelform erhalten werden können. Typische Einsatzgebiete, bei denen Kugelform als Voraussetzung für großtechnische Anwendbarkeit gilt, sind z. B. die Verwendung als Katalysator, Katalysatorträger, Ionenaustauscher oder Adsorber. Dabei darf aber nicht übersehen werden, daß auch das Material in Kugelform die für den jeweiligen Einsatz erforderlichen physikalischen Eigenschaften, wie eine bestimmt Porosität oder eine bestimmte spezifische Oberfläche aufweisen muß, wenn eine optimale Wirkung erreicht werden soll.

Aufgabe der Erfindung ist daher, unlösliche polymere Organosiloxanaminverbindungen der in DE-PS 31 20 214 beschriebenen Art in Kugelform mit den gewünschten physikalischen Eigenschaften bereitzustellen. Diese Aufgabe wird erfindungsgemäß gelöst durch geformte polymere, gegebenenfalls vernetzte, tertiäre oder sekundäre Organosiloxanaminverbindungen mit den in den Stoffansprüchen aufgeführten Merkmalen. Dabei ist von Bedeutung, daß über die Lehre der DE-PS 31 20 214 hinaus, der Polymerstoff auch unterschiedliche Vernetzer enthalten kann.

Die monomeren Vorstufen der erfindungsgemäßen geformten Produkte sind prinzipiell bekannte Verbindungen, beispielsweise der Formeln

$HN[CH_2CH_2CH_2Si(OCH_3)_3]_2$ ,
$N[CH_2CH_2CH_2Si(OC_2H_5)_3]_3$

und

$(H_3C)N[CH_2Si(OC_2H_5)_3]_2$ .

Die Zusammensetzung der deraus erhältlichen Polymereinheiten läßt sich hier durch die Formeln

$HN[CH_2CH_2CH_2SiO_{3/2}]_2$ ,
$N[CH_2CH_2CH_2SiO_{3/2}]_3$

und

$(H_3C)N[CH_2SiO_{3/2}]_2$

beschreiben.

Besondere Vorteile bezüglich der Verfügbarkeit der Ausgangsmaterialien und der stofflichen Eigenschaften des Polymers werden mit Aminen erreicht, die aus Einheiten

$N[CH_2CH_2CH_2SiO_{3/2}]_3$

oder

$HN[CH_2CH_2CH_2SiO_{3/2}]_2$ .

bestehen.

Ein besonders wichtiger Gegenstand der Erfindung ist das Verfahren zur Herstellung der erfindungsgemäßen geformten polymeren Organopolysiloxanaminverbindungen. Es ist dadurch gekennzeichnet, daß man ein sekundäres oder ein tertiäres Aminoorganosilan der allgemeinen Formel

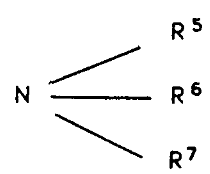

(III)

in welcher $R^5$ und $R^6$ gleich oder verschieden sind und eine Gruppe der allgemeinen Formel

$- R^4 - Si(OR^8)_3$ (IV)

bedeuten,
$R^4$ dieselbe Bedeutung wie in Formel (II) hat,
$R^8$ eine lineare oder verzweigte Alkylgruppe mit 1 bis 5 C-Atomen und
$R^7$ gleich $R^5$ und $R^6$ oder Wasserstoff, eine lineare oder verzweigte Alkylgruppe mit 1 bis 10 C-Atomen, eine aus 5 bis 8 C-Atomen bestehende Cycloalkylgruppe oder die Benzylgruppe ist,
gegebenenfalls nach Zusatz eines oder mehrerer Vernetzer der allgemeinen Formel

$M(OR)_{2-4}R'_{0-2}$ bzw. $Al(OR)_{2-3}R'_{0-1}$

wobei M ein Silicium-, Titan- oder Zirkonatom, R' eine lineare oder verzweigte Alkylgruppe mit 1 bis 5 C-Atomen ist, und das Verhältnis der Siliciumatome aus den Gruppen der allgemeinen Formel (IV) zu den Metallatomen in den Vernetzern 1 : 0 bis 1 : 10 beträgt, in einem weitgehend wassermischbaren aber Aminoorganosilan und Vernetzer lösenden üblichen Lösungsmittel auflöst, der Lösung unter Rühren eine zumindest für die vollständige Hydrolyse und Kondensation ausreichende Menge Wasser zufügt, das Reaktionsgemisch unter Weiterrühren bei einer bestimmten Temperatur im Bereich von Raumtemperatur bis 200 ° C unter der Maßgabe gelieren läßt, daß es bei Gelierungsbeginn oder bis zu einer Stunde danach mit 10 bis 2000 Gew.%, vorzugsweise 50 bis 500 Gew.%, bezogen auf die Gesamtmenge von Aminoorganosilan (III) und gegebenenfalls Vernetzer, eines weitgehend wasserunlöslichen, aber die (an)gelierte Reaktionsmischung lösenden üblichen Lösungsmittels versetzt und homogenisiert wird, dem viskosen Homogenisat sofort oder im Zeitraum biz zu einer Stunde, gegebenenfalls unter Erhöhung der ursprünglich eingestellten Temperatur, 10 bis 2000 Gew.%, vorzugsweise 50 bis 1000 Gew.%, bezogen auf die Gesamtmenge Aminoorganosilan und gegebenenfalls Vernetzer, Wasser zugibt, die jetzt Siloxan enthaltende organische Phase in dem flüssigen Zweiphasensystem dispergiert und den sich in Form von Kugeln bildenden Feststoff nach dafür ausreichender Reaktionszeit bei Raumtemperatur bis 200 ° C von der flüssigen Phase abtrennt und dann gegebenenfalls extrahiert, bei Raumtemperatur bis 250 ° C, gegebenenfalls unter Schutzgas oder im Vakuum trocknet und 1 bis 100 Stunden bei Temperaturen von 150 bis 300 ° C tempert und/oder klassifiziert.

Prinzipiell können als Ausgangsstoffe für das Verfahren anstelle der Alkoxisilylaminverbindungen auch die entsprechenden Halogenid- oder Phenoxyverbindungen eingesetzt werden, doch bietet deren Verwendung keine Vorteile, sondern kann, z. B. im Fall der Chloride, Schwierigkeiten durch die bei der Hydrolyse freiwerdende Salzsäure verursachen.

Die Hydrolyse von Ausgangsstoff und gegebenenfalls Vernetzer muß in einem weitgehend wassermischbaren, aber die Ausgangsstoffe lösenden Lösungsmittel durchgeführt werden. Bevorzugt werden dabei Alkohole verwendet, die zu den Alkoxigruppierungen an den monomeren Vorstufen der Ausgangsstoffe bzw. an den Metallatomen der gegebenenfalls eingesetzten Vernetzer korrespondieren. Besonders geeignet ist Methanol, Ethanol, n- und i-Propanol, n- und i-Butanol oder n-Pentanol. Auch Gemische solcher Alkohole können als Lösungsmittel bei der Hydrolyse angewandt werden. Anstelle von Alkoholen können auch andere polare Lösungsmittel, die weitgehend wassermischbar sind, eingesetzt werden, doch erweist sich dies aus verfahrenstechnischen Gründen wegen der mit dem hydrolytisch abgespaltenen Alkohol zustandekommenden Lösungsmittelgemische als wenig sinnvoll.

Bevorzugt führt man die Hydrolyse mit eine Überschuß an Wasser über die stöchiometrisch erforderliche Menge durch. Die zur Hydrolyse benötigte menge Wasser hängt von der Hydrolysegeschwindigkeit des jeweils verwendeten Aminoorganosilans bzw. des Vernetzers derart ab, daß mit zunehmender Menge Wasser raschere Hydrolyse erfolgt; allerdings kann eine Obergrenze durch auftretende Entmischung und Ausbildung eines Zweiphasensystems vorgegeben sein. Grundsätzlich ist eine Hydrolyse in homogener Lösung vorzuziehen. Aufgrund der genannten beiden Aspekte wird in praxi gewichtsmäßig etwas weniger Wasser verwendet als Aminoorganosilan zuzüglich Vernetzer.

Die Dauer der Hydrolyse hängt von der Hydrolyseneigung von Ausgangsstoff und/oder Vernetzer und von der Temperatur ab. Die Hydrolysebereitschaft und damit -geschwindigkeit hängt insbesondere von der Art der Silicium- bzw. Titan-, Zirkonium-, Aluminium-ständigen Alkoxigruppen ab, wobei die Methoxigruppe am schnellsten hydrolysiert und mit steigender Kettenlänge des Kohlenwasserstoffrests eine Verlangsamung eintritt. Daneben hängt die Dauer des Gesamtvorganges Hydrolyse und Polykondensation von der Basizität des Aminoorganosilans ab. Amine fungieren nämlich bekanntlich als Kondensationsbeschleuniger, indem sie eine Autokatalyse bewirken. Hydrolyse und Polykondensation können daher durch Zusatz von Basen, wie Ammoniak, aber auch von üblichen Kondensationskatalysatoren, wie Dibutylzinndiacetat, beschleunigt werden.

Das Erfordernis, den in Lösungsmittel gelösten und mit Wasser versetzten Ausgangsstoff unter Weiterrühren auf einer bestimmten Temperatur zu halten, resultiert daher, daß die Geschwindigkeit der sich durch Gelierung anzeigenden Polykondensation temperaturabhängig ist.

Die in der Hydrolyse- bzw. Gelierphase anzuwendende Temperatur wird im Einzelfall empirisch festgelegt und meistens nach Einstellung konstantgehalten. Es wird dabei darauf geachtet, daß für den darauffolgenden nächsten Verfahrensschritt die sog. Formungsphase, eine feststoffreie, flüssigkeitdurchsetzte geleeartige Masse erhalten bleibt.

Die mit der Überführung der kohärenten flüssigkeitdurchsetzten gelartigen Masse (in der die Kondensationsreaktion weiter fortschreitet) in separate sphärische Teilchen einhergehende Formungsphase beginnt mit dem Versetzen der (an)gelierten Reaktionsmischung mit einem weitgehend wasserunlöslichen, aber die Reaktionsmischung ausreichend lösenden Lösungsmittel in der vorgesehenen Menge.

Geeignete Lösungsmittel sind z. B. lineare oder verzweigte Alkohole mit 4 bis 18 C-Atomen oder Phenole, lineare oder verzweigte symmetrische odr unsymmetrische Dialkylether sowie Di- oder Triether (wie Ethylenglycoldimethylether) chlorierte oder fluorierte Kohlenwasserstoffe, mit einer oder mehreren Allylgruppen substituierte Aromaten oder Aromatengemische, wie z. B. Toluol oder Xylol, weitgehend mit Wasser nicht mischbare symmetrische und unsymmetrische Ketone.

Bevorzugt wird der (an)gelierten Reaktionsmischung jedoch ein linearer oder verzweigter Alkohol mit 4 bis 12 C-Atomen, Toluol oder o-, m-, p-Xylol, einzeln oder im Gemisch, zugesetzt.

Dieser Lösungsmittelzusatz bewirkt nach der Homogenisierung mit der Reaktionsmischung eine Verdünnung und damit eine deutliche Verlangsamung der mit Viskositätszunahme einhergehenden Kondensationsreaktion.

Die Bemessung der Menge dieses in der Formungsphase verwendeten Lösungsmittels hängt insbesondere davon ab, welche Korngröße jeweils für die geformte Organosiloxanaminverbindung angestrebt wird. Als Faustregel kann gelten, daß für grobes Korn ( = Kugeln von größerem Durchmesser) wenig, für feines Korn (Kugeln von kleinerem Durchmesser) viel Lösungsmittel zu verwenden ist.

Einfluß auf die Korngröße nimmt darüber hinaus auch die Intensität, mit der das viskose Homogenisat aus Reaktionsmischung und weitgehend wasserunlöslichem Lösungsmittel in dem in der Formungsphase als Dispersionsmittel zugesetzten weiteren Wasser dispergiert wird. Durch starkes Rühren wird regelmäßig die Ausbildung eines feineren Korns begünstigt. Zur Stabilisierung der wäßrigen Dispersion der (jetzt Siloxan enthaltenden) organischen Phase kann eines der bekannten Dispergierhilfsmittel, wie langkettige Carbonsäuren oder deren Salze oder Polyalkylenglycole in üblichen Konzentrationen verwendet werden.

Nach einer Variante des erfindungsgemäßen Verfahrens wird ein Teil oder auch die Gesamtmenge des bei oder nach Gelierungsbeginn zuzusetzenden, weitgehend wasserunlöslichen Lösungsmittels schon in der

Hydrolysestufe neben dem dort verwendeten Lösungsmittel eingesetzt. Bei Teilzugabe wird der Rest nach Gelierungsbeginn zugesetzt.

Im Extremfall der Zugabe der Gesamtmenge kann das Dispersionsmittel Wasser bei oder nach Gelierungsbeginn zugesetzt werden. Diese Variante wird dann bevorzugt angewendet, wenn das eingesetzte Aminoorganosilan außerordentlich hohe Hydrolyse- und Polykondensationsneigung zeigt.

Die bevorzugte Temperatur, bei der die Dispergierung der Siloxan enthaltenden organischen Phase in der wäßrigen Phase durchgeführt und aus der dispersen Phase kugelförmiger Feststoff gebildet wird, ist in der Regel die Rückflußtemperatur der Gesamtmischung. Grundsätzlich können aber dieselben Temperaturen wie in der Gelierstufe angewandt werden. Die Gesamtdauer von Dispergierungsstufe und Nachreaktion beträgt in der Regel 0,5 bis 5 Stunden.

Sowohl die Gelierung als auch die Formung können bei Normaldruck oder einem Überdruck, welcher der Summe der Partialdrucke der Komponenten der Reaktionsmischung bei der jeweils angewandten Temperatur entspricht, durchgeführt werden.

Bei der Herstellung von vernetzten Organopolysiloxanaminen kann, was auch abhängig von der Art der Alkoxigruppen ist, der Fall eintreten, daß das Aminoorganosilan ein anderes Hydrolyse- und Polykondensationsverhalten besitzt als der Vernetzer. In diesem Fall sieht eine Ausgestaltung des erfindungsgemäßen Verfahrens vor, den Vernetzer nicht gemeinsam mit dem Aminoorganosilan der Gelierung zu unterwerfen, sondern das Aminoorganosilan zunächst separat zu gelieren, mit dem weitgehend wasserunlöslichen Lösungsmittel zu homogenisieren und erst dann den oder die Vernetzer dem Homogenisat zuzusetzen.

Es können aber auch dem gelierten Aminoorganosilan gleichzeitig das Lösungsmittel und der Vernetzer zugesetzt werden, wobei sich Homogenisierung, Wasserzugabe und Dispergierung anschließen.

Eine andere Variante zur Herstellung vernetzter Organopolysiloxanamine sieht vor, daß das Aminoorgansilan und der oder die Vernetzer zunächst vorkondensiert werden, um ein unterschiedliches Hydrolyse- und Polykondensationsverhalten auszugleichen. Hierzu wird das Aminoorganosilan und der oder die Vernetzer ohne oder unter Verwendung eines zu den Alkoxigruppen korrespondierenden Alkohols in Gegenwart von nicht zur vollständigen Hydrolyse, vorzugsweise 1 bis 30 Mol % der hierzu benötigten Menge Wasser über einen Zeitraum von 5 Minuten biz zu 24 Stunden bei Raumtemperatur bis 200° C vorkondensiert. Um diesen Vorkondensationseffekt zu begünstigen kann dabei, zusätzlich zu dem vorhandenen Aminoorganosilan, noch ein weiterer Kondensationskatalysator der vorstehend genannten Art zugesetzt werden. Bevorzugt wird Ammoniak verwendet. Nach erfolgter Vorkondensation wird die vollständige Hydrolyse und Polykondensation wie beschrieben durchgeführt.

Die Abtrennung des kugelig geformten feuchten Produktes von dem flüssigen Dispersionsmittel kann durch übliche Maßnahmen, wie Dekantieren, Abfiltrieren oder Zentrifugieren erfolgen. Man kann dazu aber auch die flüssige Phase aus dem Reaktor entfernen, den verbleibenden Feststoff darin ein- oder mehrmals mit einem niedrigsiedenden Extraktionsmittel, bevorzugt einem niedrigsiedenden Alkohol, behandeln, um durch zumindest teilweisen Austausch des meist relativ hochsiedenden Lösungsmittels der Formungsphase gegen das niedrigsiedende Extraktionsmittel die spätere Trocknung des geformten Materials zu erleichtern.

Die Trocknung kann grundsätzlich bei Raumtemperatur bis 250° C, gegebenenfalls unter Schutzgas oder im Vakuum, durchgeführt werden. Zur Härtung und Stabilisierung kann der getrocknete geformte Festoff bei Temperaturen von 150 bis 300° C getempert werden.

Das getrocknete bzw. getemperte Produkt kann in üblichen Vorrichtungen in verschiedene Korngrößenfraktionen klassifiziert werden. Von den Aufarbeitungsmaßnahmen Extraktion, Trocknung, Temperung und Klassifizierung kann, je nach den Umständen, die eine oder andere entfallen. Eine Klassifikation kann an flüssigkeitsfeuchtem, getrocknetem oder getempertem Produkt durchgeführt werden.

Eine besonders wichtige Ausführungsform des erfindungsgemäßen Verfahrens sieht vor, das noch lösungsmittel- und wasserfeuchte bzw. -nasse kugelförmige Material einer Temperaturbehandlung während 1 Stunde bis zu einer Woche bei Temperaturen von 50 bis 300, vorzugsweise 100 bis 200° C zu unterwerfen, wobei bedarfsweise Überdruck angewandt wird.

Diese Behandlung unter "dämpfenden" bzw. digerierenden Bedingungen dient ebenfalls überwiegend einer Verbesserung der mechanischen Festigkeit und der Porosität des geformten Materials und kann auch in der zuletzt vorliegenden, die feste Produktphase enthaltenden Dispersion des Herstellungsganges oder in Wasser allein durchgeführt werden.

Die vorstehend beschriebene Ausführungsform einer Nachbehandlung der erhaltenen, aber nicht getrockneten geformten Organosiloxanaminverbindungen besteht also darin, den in Form von Kugeln ausgebildeten Feststoff in Anwesenheit mindestens der Komponente Wasser der im Herstellungsgang zuletzt vorliegenden flüssigen Phase als Dampf oder Flüssigkeit, einer Temperaturbehandlung während 1 Stunde bis zu einer Woche bei Temperaturen von 50 bis 300, vorzugsweise 100 bis 200° C, zu unterwerfen. Dabei kann die Anwesenheit eines sauren, basischen oder metallhaltigen Kondensationskatalysators von Vorteil sein.

Charakterisiert sind die neuen kugelig geformten Organosiloxanaminverbindungen analog zu den in der DE-PS 31 20 214 beschriebenen Systemen insbesondere anhand der quantitativen Hydrolyseausbeuten, der Elementaranalysen und durch die Bestimmung der Aminkapazitäten.

Die kugelförmigen vernetzten, tertiären oder sekundären Organosiloxanaminverbindungen sind ebenfalls ein Gegenstand der Erfindung und bestehen aus Einheiten der allgemeinen Formel

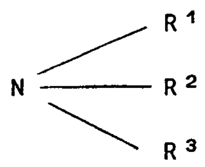 (I)

in welcher $R^1$ und $R^2$ gleich oder verschieden sind und eine Gruppe der allgemeinen Formel

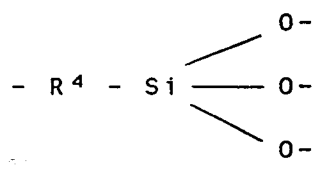 (II)

bedeuten, wobei die Stickstoffatome in (I) über die Reste $R^4$ mit den Siliciumatomen in (II) verbunden sind und

$R^4$ eine Alkylengruppe mit 1 bis 10 C-Atomen, eine Cycloalkylengruppe mit 5 bis 8 C-Atomen oder eine Einheit der allgemeinen Formel

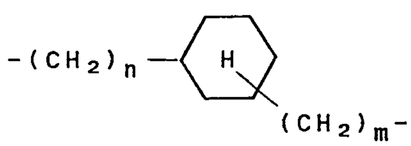 oder 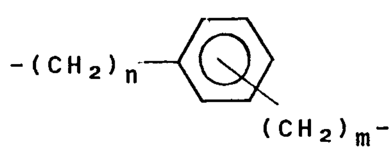

darstellt, in der

n eine Zahl von 1 bis 6 ist und die Zahl der stickstoffständigen Methylengruppen angibt und m eine Zahl von 0 bis 6 ist,

und wobei die freien Valenzen der an das Siliciumatom gebundenen Sauerstoffatome wie bei Kieselsäuregerüsten durch Siliciumatome weiterer Gruppen der Formel (II) und/oder mit den Metallatomen einer oder mehrerer der vernetzenden Brückenglieder

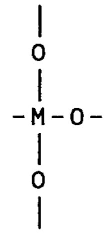 oder 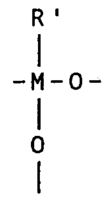 oder 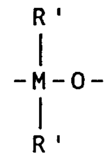

bzw.

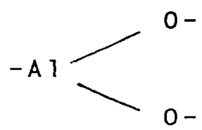 oder 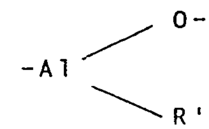

abgesättigt sind, wobei M ein Silicium-, Titan- oder Zirkoniumatom und R' eine lineare oder verzweigte Alkylgruppe mit 1 bis 5 C-Atomen ist und das Verhältnis der Siliciumatome aus den Gruppen der allgemeinen Formel (II) zu den Metallatomen in den Brückengliedern 1 : 0 bis 1 : 10 beträgt, und in welcher $R^3$ gleich $R^1$ und $R^2$ ist oder Wasserstoff, eine lineare oder verzweigte Alkylgruppe aus 1 bis 10 C-Atomen, eine aus 5 bis 8 C-Atomen bestehende Cycloalkylgruppe oder die Benzylgruppe ist.

Darüber hinaus besitzen die geformten Produkte einen Teilchendurchmesser von 0,01 bis 3,0, vorzugsweise 0,1 bis 2,0 mm, eine spezifische Oberfläche bis 1000, vorzugsweise bis 700 $m^2/g$, ein spezifisches Porenvolumen bis 6,0 ml/g und eine Schüttdichte von 50 bis 1000, vorzugsweise 100 bis 800 g/l. Die einstellbaren Porendurchmesser liegen im Bereich bis über 1000 nm.

Die chemische Stabilität der geformten Produkte ist mit denen der ungeformten Produkte vergleichbar, d. h. an Luft ist eine thermische Stabilität bis zu etwa 275° C und unter Schutzgasatmosphäre bis zu 400° C gegeben.

Die Anwendbarkeit der geformten Organosiloxanaminverbindungen erstreckt sich grundsätzlich auf dieselben Anwendungsgebiete, wie sie für die sog. schwach basischen Ionenaustauscher auf der Grundlage organischer Polymersysteme typisch sind; sie ist jedoch nicht auf diese beschränkt. Eine charakteristische Verwendung der geformten polymeren sekundären und tertiären Amine, die ein weiterer Gegenstand der Erfindung ist, besteht in der Entfernung von Säuren aus Flüssigkeiten und Gasen nach gängigen Verfahrenstechniken.

Wenn die geformten Organosiloxanaminverbindungen in Wasser oder einem organischen Medium eingesetzt werden sollen, empfiehlt es sich, die Benetzung mit Wasser oder dem organischen Medium möglichst schonend vorzunehmen, um eine mechanische Schädigung, insbesondere ein Platzen der Kugeln zu vermeiden. Eine besonders schonende Methode der Benetzung besteht in einer Begasung des Materials mit wasserfeuchter oder lösungsmittelbeladener, vorzugsweise lösungsmittelgesättigter Luft oder einem Inertgas, bevor eine Überführung in das jeweilige flüssige Medium erfolgt.

Wenn das geformte Organosiloxanamin schließlich in das entsprechende Medium eingebracht ist, kann es notwendig werden, Spuren von Fremdkomponenten aus dem Herstellungsprozess zu entfernen. Dies kan geschehen durch mehrfaches Spülen und Stehenlassen in einem der genannten flüssigen Medien oder aber durch kurzzeitiges Erhitzen. Dabei kann es in manchen Fällen vorteilhaft sein, das Organosiloxanamin durch Umsetzung mit einer Protonensäure in die entsprechende Ammoniumform zu überführen.

Eine weitere Verwendung, die über die Lehre der DE-PS 31 20 214 hinausgeht, ist der Einsatz der geformten Organosiloxanamine zur adsorptiven Bindung von gasförmigen organischen Verbindungen, vorzugsweise organischen Lösungsmitteln. Die Polarität dieser organischen Verbindungen spielt dabei keine wesentliche Rolle, es werden z. B. sowohl kurzkettige Alkohole als auch langkettige Aliphaten oder auch Aromaten gebunden. Entscheidend für die Fähigkeit zur Adsorption ist vielmehr vor allem das spezifische Porenvolumen, der Porendurchmesser und die Oberflächeneigenschaften. Diese Faktoren können einerseits über die erfindungsgemäßen Herstellungs- und Nachbehandlungsverfahren sowie andererseits auch über die chemische Zusammensetzung, z. B. durch den Einbau hydrophobierend wirkender Vernetzergruppen in

das Aminosiloxangerüst, beeinflußt werden. Die Kapazitäten der erfindungsgemäßen geformten Aminosiloxane für diese organischen Verbindungen betragen teilweise bis zu über 100 Gew. %. Eine Regenerierung ist durch Temperaturerhöhung und/oder durch Begasen mit Luft oder einem Inertgas ohne weiteres möglich. Analog zu dem Einsatz als Ionenaustauscher kann auch die Verwendung der geformten Aminosiloxane als Adsorber sowohl nach dem statischen als auch nach dem dynamischen Adsorptionsprinzip erfolgen.

Die Erfindung wird nachfolgend anhand von Ausführungsbeispielen weiter erläutert.

Beispiel 1

200 g eines tertiären Aminosilans der Formel $N[(CH_2)_3Si(OC_2H_5)_3]_3$ wurden mit 200 ml Ethanol in einem zylindrischen 2 l-Glasgefäß mit Doppelmantel, aufgesetztem KPG-Rührer mit Halbmond-Rührblatt, Rückflußkühler und Tropftrichter vereinigt. Die Lösung wurde über den Doppelmantel auf nahezu Rückflußtemperatur aufgeheizt und dann mit 70 ml entsalztem Wasser versetzt. Es wurde noch 15 min. unter Rückflußtemperatur gerührt und dann die Heizung abgestellt. Unter langsamem Rühren kühlte die Lösung ab, wobei nach ca. 30 min. bei einer Innentemperatur von 55° C die Gelierung einsetzte. 3 min. nach Gelierbeginn wurden dem gebildeten Gel 400 ml auf 50° C aufgeheiztes Xylol (technisches Isomerengemisch) zugesetzt. Die Rührung wurde jetzt auf 700 U/min. eingestellt und nachdem wieder eine klare viskose Lösung gebildet worden war, wurden 400 ml 50° C warmes entsalztes Wasser zugegeben. In den 400 ml Wasser waren vorher 2 g Polyethylenglycol (Mowiol® 4-98) gelöst worden. Das 2-Phasensystem wurde jetzt wieder aufgeheizt und weiter bei 700 U/min. gerührt. Bei Erreichen der Rückflußtemperatur setzte die Kugelbildung ein. Es wurde noch 2 Stunden bei Rückflußtemperatur gerührt, dann der Kolbeninhalt abgekühlt und das vollständig in Form von Kugeln vorliegende Material von der flüssigen Phase abfiltriert. Die Kugeln wurden anschließend in einen Trockenschrank überführt, der mit Stickstoff gespült wurde und dann 4 Stunden bei 50° C, 4 Stunden bei 100° C und 16 Stunden bei 150° C getrocknet. Das geformte Produkt, das aus Polymereinheiten der Formel $N[(CH_2)_3SiO_{3/2}]_3$ bestand, wurde dann in eine Säule überführt, mit feuchter Luft 24 Stunden lang begast und anschließend in Korngrößen fraktioniert. Von den insgesamt 94,2 g besaßen 92 % eine Korngröße von 0,3 bis 1,2 mm.

| | |
|---|---|
| Spezifische Oberfläche: | 386 $m^2/g$ |
| Spezifisches Porenvolumen: | 0,68 ml/g |
| Schüttdichte: | 536 g/l |

Beispiel 2

400 g eines sekundären Aminosilans der Formel $HN[(CH_2)_3Si(OC_2H_5)_3]_2$, 400 ml Ethanol und 450 ml Octanol wurden in einem zylindrischen 3 l-Glasgefäß mit Doppelmantel, aufgesetztem KPG-Rührer mit Halbmond-Rührblatt, Rückflußkühler und Tropftrichter vereinigt.

Die Lösung wurde auf Rückflußtemperatur aufgeheizt und in der Siedehitze mit 60 ml entsalztem Wasser versetzt. Es wurde 15 min. unter Rückfluß gerührt und dann die Mischung auf 35° C abgekühlt. Nach 60 min. langsamen Rühren bei 35° C setzte die Gelierung ein. Sofort beim Einsetzen der Gelierung wurden der Mischung 450 ml Octanol zugesetzt. Nach Einstellen der Rührgeschwindigkeit auf 500 U/min. und einer Homogenisierung der Mischung wurden 1200 ml entsalztes Wasser zugegeben. Anschließend wurde auf Rückflußtemperatur aufgeheizt und 1 Stunde bei dieser Temperatur gerührt. Es wurde abgekühlt und dann die flüssige Phase mit einem Tauchrohr aus dem Reaktionsgefäß abgesaugt. Die zurückgebliebenen Kugeln wurden zweimal je 10 min. lang mit jeweils 800 ml Ethanol extrahiert und schließlich über ein Filter von der flüssigen Phase abgetrennt und dann 4 Stunden bei 60° C, 4 Stunden bei 100° C und 16 Stunden bei 150° C unter Stickstoff getrocknet. Es wurden 192 g hochsymmetrisches kugelförmiges Produkt, bestehend aus Polymereinheiten der Formel $HN[(CH_2)_3SiO_{3/2}]_2$ erhalten, wovon 98 % eine Korngröße von 0,3 bis 1,4 mm hatte.

| | |
|---|---|
| Spezifische Oberfläche: | 506 $m^2/g$ |
| Spezifisches Porenvolumen: | 1,6 ml/g |
| Schüttdichte: | 515 g/l |

Beispiel 3

200,8 g $N[(CH_2)_3Si(OC_2H_5)_3]_3$, 199,2 g $Si(OC_2H_5)_4$ und 400 ml Ethanol wurden in einem zylindrischen 3 l-Glasgefäß mit Doppelmantel, KPG-Rührer, Rückflußkühler und Tropftrichter vereinigt. Nach Zusatz von 140 ml Wasser wurde die Lösung auf Rückflußtemperatur aufgeheizt und 25 min. bei dieser Temperatur gerührt. Es wurde auf 70° C abgekühlt und langsam weitergerührt. Nach 30 min. Rühren bei 70° C gelierte der Ansatz. Zwei Minuten nach Gelierbeginn wurden dem Ansatz 750 ml 60° C warmes Toluol zugesetzt und die Rührung auf 700 U/min. eingestellt. Die Mischung wurde aufgeheizt und bei Erreichen von 70° C wurden 750 ml Wasser zugesetzt. Anschließend wurde 45 min. unter Rückfluß gerührt, dann abgekühlt und die Suspension auf ein Filter überführt. Die flüssige Phase wurde abgetrennt und das geformte Produkt in einen Trockenschrank überführt, wo es 4 Stunden bei 60° C, 4 Stunden bei 100° C und 16 Stunden bei 120° C unter Stickstoff getrocknet wurde. Erhalten werden konnten 168 g kugelförmiges Material, bestehend aus Polymereinheiten der Formel $N[(CH_2)SiO_{3/2}]_3 \cdot 3SiO_2$, wovon über 95% eine Korngröße von 0,1 bis 1,4 mm besaßen.

| | |
|---|---|
| Spezifische Oberfläche: | 593 $m^2/g$ |
| Spezifisches Porenvolumen: | 0,82 ml/g |
| Schüttdichte: | 344 g/l |

Beispiel 4

161,9 g $N[(CH_2)_3Si(OC_2H_5)_3]_3$, 38,1 $(CH_3)_2Si(OC_2H_5)_2$, 70 ml Wasser wurden in 200 ml Ethanol vereinigt. Analog zu Beispiel 3 wurden nach 15 min. Rückfluß, Gelieren bei 70° C, Zusatz von 320 ml Xylol, 45 minütigem Rühren bei 500 U/min. unter Rückfluß und 6-stündiger Trocknung bei 80° C sowie 18-stündiger Trocknung bei 135° C unter $N_2$-Atmosphäre 109,6 g geformtes Produkt $N[(CH_2)_3SiO_{3/2}]_3 \cdot$ -$(CH_3)_2SiO_{2/2}$ erhalten.

| | |
|---|---|
| Korngrößenverteilung: | 95 % zwischen 0,3 und 1,8 mm |
| Spezifische Oberfläche: | 28 $m^2/g$ |
| Spezifisches Porenvolumen: | 0,2 ml/g |
| Schüttdichte: | 600 g/l |

Beispiel 5

200 g $(H_3C)N[(CH_2)_3Si(OC_2H_5)_3]_2$ und 80 ml Wasser wurden in einem zylindrischen 2 l-Glasgefäß analog zu Beispiel 3 zunächst 15 min. bei rückflußtemperatur gerührt. Nach dem Abkühlen auf 60° C gelierte die Mischung, wobei 2 min. nach Beginn der Gelierung zunächst 300 ml 60° C warmes n-Hexanol und sofort nach vollzogener Homogenisierung 400 ml Wasser zugesetzt wurden. Nach 2-stündiger Rückflußdauer und anschließender Überführung des gesamten Ansatzes in einen Stahlautoklaven wurde das erhaltene geformte Material unter langsamen Rühren einer Temperaturbehandlung bei 130° C über einen Zeitraum von 24 Stunden unterzogen.

Anschließend wurde abgekühlt, das in Form von kleinen Kugeln vorliegende Produkt von der wäßrigen Phase abfiltriert, 3 mal mit je 300 ml Ethanol extrahiert und dann 6 Stunden bei 80° C, 6 Stunden bei 100° C und 12 Stunden bei 150° C unter Schutzgasatmosphäre getrocknet. Erhalten werden konnten 99,1 g geformtes Polymerprodukt, aufgebaut aus Einheiten der Formel $(H_3C)N[(CH_2)_3SiO_{2/3}]_2$

| | |
|---|---|
| Korngrößenverteilung: | 95 % zwischen 0,3 und 2,0 mm |
| Spezifische Oberfläche: | 446 $m^2/g$ |
| Spezifisches Porenvolumen: | 0,79 ml/g |
| Schüttdichte: | 435 g/l |

Beispiel 6

200 g $N[(CH_2)_3Si(OCH_3)_3]_3$, verdünnt mit 200 ml Methanol wurden in der Siedehitze mit 60 ml $H_2O$ versetzt und sofort auf 50° C abgekühlt. Nach 20 min. gelierte die Mischung und es wurden 30 sec. nach Gelierbeginn 500 ml 50° C warmes Decanol zugegeben. Nach vollzogener Homogenisierung der Mischung wurden zunächst 97,8 g $Al(OC_4H_9)_3$ und nach einer weiteren Minute 500 ml 50° C warme Wasser zugesetzt. Die Rührung im 2 1-Rührbehälter wurde auf 500 U/min. eingestellt und dann auf Rückflußtemperatur aufgeheizt. Nach 2-stündigem Rühren unter Rückfluß wurde abgekühlt, die flüssige Phase aus dem Reaktor entfernt, das verbliebene geformte Material 3 mal mit je 300 ml Methanol gewaschen, in den Trockenschrank überführt und 6 Stunden bei 80° C, 6 Stunden bei 100° C und 12 Stunden bei 130° C unter Schutzgasatmosphäre getrocknet.

Erhalten werden konnten 137,5 g geformtes polymeres Produkt, bestehend aus Polymereinheiten der Formel $N[(CH_2)_3SiO_{3/2}]_3 \cdot AlO_{3/2}$.

| | |
|---|---|
| Korngrößenverteilung: | 95 % zwischen 0,1 und 1,8 mm |
| Spezifische Oberfläche: | 547 $m^2/g$ |
| Spezifisches Porenvolumen: | 0,58 ml/g |
| Schüttdichte: | 410 g/l |

Beispiel 7

200 g $HN[(CH_2)_{10}Si(OCH_3)_3]_2$, 154,0 g $Si(OC_2H_5)_4$, 100 ml Ethanol, 50 ml $H_2O$ und 150 ml Octanol wurden in einem Rührbehälter vereinigt und auf Rückflußtemperatur aufgeheizt. Es wurde so lange refluxiert (ca. 2 Stunden) bis die Gelierung einsetzte. 5 min. nach Gelierbeginn wurden zu dem Gel 300 ml 70° C warmes Wasser zugesetzt, in dem vorher 1 g Mowiol gelöst worden war. Anschließend wurde weitere 4 Stunden bei 600 U/min unter Rückfluß gerührt, dann abgekühlt, die gesamte Reaktionsmischung in einen Rührautoklaven überführt und 24 Stunden bei 150° C langsam gerührt. Nach dem Abfiltrieren und 3 maligem Waschen mit je 300 ml Ethanol wurde das geformte Produkt im Trockenschrank 6 Stunden bei 80° C, 6 Stunden bei 100° C und 16 Stunden bei 150° C unter $N_2$-Atmosphäre getrocknet. Es wurden 188,6 g geformtes Produkt, bestehend aus Polymereinheiten der Formel $HN[(CH_2)_{10}SiO_{3/2}]_3 \cdot 2SiO_2$ erhalten.

| | |
|---|---|
| Korngrößenverteilung: | 95 % zwischen 0,3 - 2,2 mm |
| Spezifische Oberfläche: | < 1 $m^2/g$ |
| Schüttdichte: | 680 g/l |

Beispiel 8

200 g

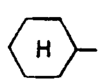 $N[(CH_2)_3Si(OCH_3)_3]_2$,

200 ml Ethanol und 70 ml Wasser wurden in einem zylindrischen 2 l-Glasgefäß zunächst 45 min. unter Rückfluß gerührt. Nach dem Abkühlen auf 75° C gelierte der Ansatz und 1 min. nach Gelierbeginn wurden zunächst 400 ml Diisopropylether, dann 134,2 g $Ti(OC_3H_7)_4$ und schließlich 500 ml Wasser zugesetzt. Es wurde anschließend 2 Stunden bei 600 U/min unter Rückfluß gerührt, dann abgekühlt, der in Form von Kugeln vorliegende Feststoff abfiltriert und 6 Stunden bei 80° C, 6 Stunden bei 100° C und 12 Stunden bei 130°C unter Stickstoff getrocknet. Es wurden 171,0 g polymeres geformtes Produkt, bestehend aus Polymereinheiten der Formel

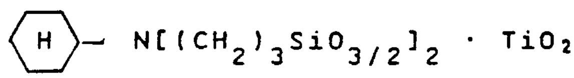

erhalten.

| | |
|---|---|
| Korngrößenverteilung: | 95 % zwischen 0,3 und 1,8 mm |
| Spezifische Oberfläche: | 472 $m^2/g$ |
| Spezifisches Porenvolumen: | 0,67 ml/g |
| Schüttdichte: | 482 g/l |

Beispiel 9

200 g

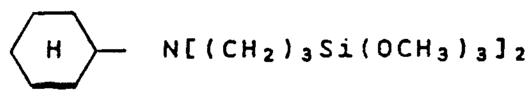

und 134,2 g $Ti(OC_3H_7)_4$ wurden zunächst 3 Stunden in 200 ml Ethanol, in denen 2 g $NH_3$ und 2 g Wasser gelöst worden waren, unter Rückflußtemperatur vorkondensiert. Anschließend wurden 70 ml Wasser zugesetzt, auf 70° C abgekühlt und weiter wie nach Beispiel 8 verfahren. Erhalten wurden 172,1 g Produkt gemäß Beispiel 8.

| | |
|---|---|
| Korngrößenverteilung: | 98 % zwischen 0,3 bis 2,3 mm |
| Spezifische Oberfläche: | 430 $m^2/g$ |
| Spezifisches Porenvolumen: | 0,69 ml/g |
| Schüttdichte: | 493 g/l |

Beispiel 10

200 g

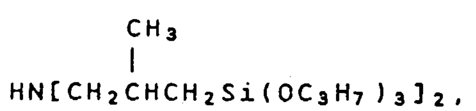

250 ml Isopropanol und 60 ml Wasser wurden in einem zylindrischen 2 l-Glasgefäß 15 min. unter Rückfluß gerührt, dann auf 70° C abgekühlt und langsam weiter gerührt, bis die Gelierung einsetzte. Sofort nach dem Einsetzen der Gelierung wurden dem sich bildenden Gel 500 ml 2-Ethyl-hexanol, dann 285,3 g $Zr(OC_4H_9)_4$ und schließlich 500 ml Wasser zugesetzt.

Nach Einstellung der Rührung auf 500 U/min. wurde 2 Stunden unter Rückfluß gerührt, dann abgekühlt, der in Form von Kugeln vorliegende Feststoff abfiltriert, 3 mal mit je 400 ml Isopropanol extrahiert und dann 6 Stunden bei 80° C, 6 Stunden bei 100° C und 12 Stunden bei 130°C unter Stickstoff getrocknet. Es wurden 175,8 g polymeres geformtes Produkt, bestehend aus Polymereinheiten der Formel

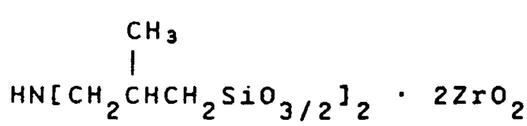

erhalten.

| | |
|---|---|
| Korngrößenverteilung: | 95 % zwischen 0,1 - 1,2 mm |
| Spezifische Oberfläche: | 487 $m^2/g$ |
| Spezifisches Porenvolumen: | 0,97 ml/g |
| Schüttdichte: | 485 g/l |

Beispiel 11

200 g

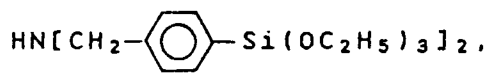

200 ml Ethanol und 70 ml Wasser wurden in einem zylindrischen 2 l-Glasgefäß zunächst 45 min. unter Rückfluß gerührt. Nach dem Abkühlen auf 70° C gelierte der Ansatz und sofort nach dem Einsetzen der Gelierung wurden 500 ml Octanol, dann 79,0 g $C_3H_7$-$Si(OC_2H_5)_3$ und schließlich 500 ml Wasser zugesetzt. Es wurde anschließend 2 Stunden bei 600 U/min unter Rückfluß gerührt, dann abgekühlt, der in Form von Kugeln vorliegende Feststoff abfiltriert, 3 mal mit je 400 ml Ethanol extrahiert und 6 Stunden bei 80° C, 6 Stunden bei 100° C und 12 Stunden bei 130° C unter Stickstoff getrocknet. Es wurden 146,2 g polymeres geformtes Produkt, bestehend aus Poymereinheiten der Formel

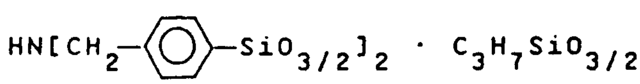

erhalten.

| | |
|---|---|
| Korngrößenverteilung: | 95 % zwischen 0,3 - 1,2 mm |
| Spezifische Oberfläche: | 45 $m^2/g$ |
| Spezifisches Porenvolumen: | 0,48 ml/g |
| Schüttdichte: | 570 g/l |

Beispiel 12

Ausgehend von 161,9 g $N[(CH_2)_3Si(OC_2H_5)_3]_3$, 19,05 g $(CH_3)_2Si(OC_2H_5)_2$ und 26,8 g $Si(OC_2H_5)_4$ wurden analog zu Beispiel 4 96,1 g polymeres Produkt, bestehend aus Einheiten der Formel

$N[(CH_2)_3SiO_{3/2}]_3 \cdot 0{,}5(CH_3)_2SiO_{2/2} \cdot 0{,}5SiO_2$

erhalten.

| | |
|---|---|
| Korngrößenverteilung: | 95 % zwischen 0,3 und 1,6 mm |
| Spezifische Oberfläche: | 256 $m^2/g$ |
| Spezifisches Porenvolumen: | 0,78 ml/g |
| Schüttdichte: | 485 g/l |

Beispiel 13

Ausgehend von 200 g $N[(CH_2)_3Si(OCH_3)_3]_3$, 48,9 g $Al(OC_4H_9)_3$, 41,4 g $Si(OC_2H_5)_4$ wurden analog zu Beispiel 6 148,9 g polymeres Produkt, bestehend aus Einheiten der Formel

$N[(CH_2)_3SiO_{3/2}]_3 \cdot 0{,}5AlO_{3/2} \cdot 0{,}5SiO_2$

erhalten.

| | |
|---|---|
| Korngrößenverteilung:<br>Spezifische Oberfläche:<br>Spezifisches Porenvolumen:<br>Schüttdichte: | 95 % zwischen 0,1 und 1,6 mm<br>585 $m^2/g$<br>0,86 ml/g<br>425 g/l |

Beispiel 14

20 g (Trockengewicht) des nach Beispiel 1 hergestellten, in Form von Kugeln der Korngröße 0,3 - 1,2 mm vorliegenden Organosiloxanamins der Formel $N[(CH_2)_3SiO_{3/2}]_3$ wurden nach der gemäß Beispiel 1 durchgeführten Befeuchtung zunächst in einem Becherglas in Wasser eingeschlämmt und dann nach kurzer Standzeit in eine Säule mit einem Innendurchmesser von 15 mm überführt. Die Säule wurde zunächst mit 100 ml entsalztem Wasser und dann innerhalb von einer halben Stunde mit 100 ml wäßriger 1n HCl-Lösung beschickt. Nach dem Waschen der Säule mit 150 ml $H_2O$ wurde der mit der Waschlösung vereinigte Durchlauf mit 1n NaOH-Lösung filtriert. Dabei stellte sich heraus, daß rund 67 % der ursprünglich eingesetzten HCl-Menge von dem polymeren Amin gebunden worden waren, was einer rund 100 %igen Sättigung der vorhandenen theoretischen Kapazität entspricht.

Durch eine anschließende Umsetzung mit 200 ml 2%iger $NH_3$-Lösung war wieder eine Regenerierung des Aminosiloxans zu über 98 % möglich.

Beispiel 15

Je 10 g einer nach Beispiel 5 unter Verwendung von Octanol anstelle von Hexanol hergestellten geformten polymeren Organosiloxanaminverbindung der Formel $N[(CH_2)_3SiO_{3/2}]_3 \cdot SiO\Omega$ mit folgenden Daten

| | |
|---|---|
| Korngröße<br>Spezifische Oberfläche<br>Gesamtporenvolumen | 0,1 bis 1,2 mm<br>695 m /g<br>3,63 ml/g |

wurden in drei Glassäulen mit einem Innendurchmesser von 15 mm gefüllt. Durch diese Säulen wurde Luft geblasen, die vorher jeweils mit Isopropanol bzw. Xylol bzw. Hexan gesättigt worden war. Nach 36 Stunden wurde die jeweilige Gewichtszunahme gemessen. Dabei wurde festgestellt, daß die Säule, die mit Isopropanol beschickt worden war, 120 % Gewichtszunahme, die Säulen, die mit Xylol und n-Hexan beschickt worden waren, jeweils 100 % Gewichtszunahme (bezogen auf die eingesetzten 10 g Polysiloxan) zu verzeichnen hatten. Anschließend wurde durch die Säulen 60° C warme Luft geblasen. Nach 8 Stunden wurde festgestellt, daß das jeweils gebundene Lösungsmittel wieder vollständig abgegeben worden war.

## Patentansprüche

1. Kugelförmige polymere, gegebenenfalls vernetzte, tertiäre oder sekundäre Organosiloxanaminverbindungen, bestehend aus Einheiten der allgemeinen Formel

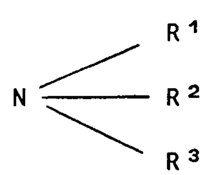

(I)

in welcher $R^1$ und $R^2$ gleich oder verschieden sind und eine Gruppe der allgemeinen Formel

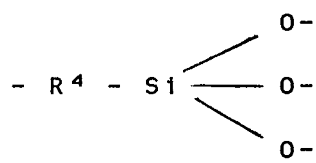

(II)

bedeuten, wobei die Stickstoffatome in (I) über die Reste $R^4$ mit den Siliciumatomen in (II) verbunden sind und
$R^4$ eine Alkylengruppe mit 1 bis 10 C-Atomen, eine Cycloalkylengruppe mit 5 bis 8 C-Atomen oder eine Einheit der allgemeinen Formel

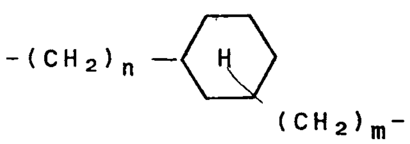

oder

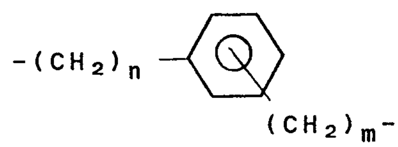

darstellt, in der
n eine Zahl von 1 bis 6 ist und die Zahl der stickstoffständigen Methylengruppen angibt und m eine Zahl von 0 bis 6 ist,
und wobei die freien Valenzen der an das Siliciumatom gebundenen Sauerstoffatome wie bei Kieselsäuregerüsten durch Siliciumatome weiterer Gruppen der Formel (II) und/oder mit den Metallatomen einer oder mehrerer der vernetzenden Brückenglieder

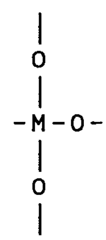

oder

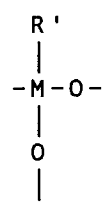

oder

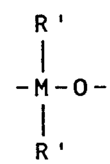

bzw.

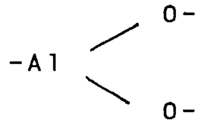

oder

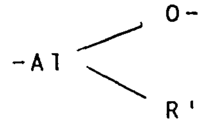

abgesättigt sind, wobei M ein silicium-, Titan- oder Zirkoniumatom und R' eine lineare oder verzweigte Alkylgruppe mit 1 bis 5 C-Atomen ist und das Verhältnis der Siliciumatome aus den Gruppen der allgemeinen Formel (II) zu den Metallatomen in den Brückengliedern 1 : 0 bis 1 : 10 beträgt, und in welcher $R^3$ gleich $R^1$ und $R^2$ ist oder Wasserstoff, eine lineare oder verzweigte Alkylgruppe aus 1 bis 10 C-Atomen, eine aus 5 bis 8 C-Atomen bestehende Cycloalkylgruppe oder die Benzylgruppe ist, mit einem Durchmesser von 0,01 bis 3,0 mm, einer spezifischen Oberfläche bis 1000 $m^2/g$, einem

spezifischen Porenvolumen bis 6,0 ml/g sowie einer Schüttdichte von 50 bis 1000 g/l.

**2.** Geformte polymere Organosiloxanaminverbindungen nach Anspruch 1,
**dadurch gekennzeichnet,**
daß $R^4$ eine lineare oder verzweigte Alkylengruppe ist.

**3.** Geformte polymere Organosiloxanaminverbindungen nach Anspruch 1 oder 2, bestehend aus Einheiten

$N[CH_2CH_2CH_2SiO_{3/2}]_3$

oder

$HN[CH_2CH_2CH_2SiO_{3/2}]_2$

**4.** Verfahren zur Herstellung der geformten polymeren Organosiloxanaminverbindungen nach einem oder mehreren der Ansprüche 1 bis 3,
**dadurch gekennzeichnet,**
daß man ein sekundäres oder ein tertiäres Aminosilan der allgemeinen Formel

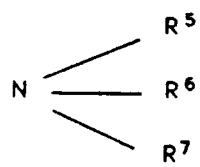

(III)

in welcher $R^5$ und $R^6$ gleich oder verschieden sind und eine Gruppe der allgemeinen Formel

$- R^4 - Si(OR^8)_3$ (IV)

bedeuten,
$R^4$ dieselbe Bedeutung wie in Formel (II) hat,
$R^8$ eine lineare oder verzweigte Alkylgruppe mit 1 bis 5 C-Atomen und
$R^7$ gleich $R^5$ und $R^6$ oder Wasserstoff, eine lineare oder verzweigte Alkylgruppe mit 1 bis 10 C-Atomen, eine aus 5 bis 8 C-Atomen bestehende Cycloalkylgruppe oder die Benzylgruppe ist,
gegebenenfalls nach Zusatz einer oder mehrerer Vernetzer der allgemeinen Formel

$M(OR)_{2-4}R'_{0-2}$ bzw. $Al(OR)_{2-3}R'_{0-1}$

wobei M ein Silicium-, Titan- oder Zirkonatom, R′ eine lineare oder verzweigte Alkylgruppe mit 1 bis 5 C-Atomen ist, und das Verhältnis der Siliciumatome aus den Gruppen der allgemeinen Formel (IV) zu den Metallatomen in den Vernetzern 1 : 0 bis 1 : 10 beträgt, in einem weitgehend wassermischbaren, aber Aminoorganosilan und Vernetzer lösenden üblichen Lösungsmittel auflöst, der Lösung unter Rühren eine zumindest für die vollständige Hydrolyse und Kondensation ausreichende Menge Wasser zufügt, das Reaktionsgemisch unter Weiterrühren bei einer bestimmten Temperatur im Bereich von Raumtemperatur bis 200° C unter der Maßgabe gelieren läßt, daß es bei Gelierungsbeginn oder biz zu einer Stunde danach mit 10 bis 2000 Gew.%, vorzugsweise 50 bis 500 Gew.%, bezogen auf die Gesamtmenge von Aminoorganosilan (III) und gegebenenfalls Vernetzer, eines weitgehend wasserunlöslichen, aber die (an)gelierte Reaktionsmischung lösenden üblichen Lösungsmittels versetzt und homogenisiert wird, dem viskosen Homogenisat sofort oder im Zeitraum biz zu einer Stunde, gegebenenfalls unter Erhöhung der ursprünglich eingestellten Temperatur, 10 bis 2000 Gew.%, vorzugsweise 50 bis 1000 Gew.%, bezogen auf die Gesamtmenge Aminoorganosilan und gegebenenfalls Vernetzer, Wasser zugibt, die jetzt Siloxan enthaltende organische Phase in dem flüssigen Zweiphasensystem dispergiert und den sich in Form von Kugeln bildenden Feststoff nach dafür ausreichender Reaktionszeit bei Raumtemperatur bis 200° C von der flüssigen Phase abtrennt und dann gegebenenfalls extrahiert, bei Raumtemperatur bis 250° C, gegebenenfalls unter Schutzgas oder im Vakuum trocknet und 1 bis 100 Stunden bei Temperaturen von 150 bis 300° C tempert und/oder klassifiziert.

5. Verfahren nach Anspruch 4,
**dadurch gekennzeichnet,**
daß als Lösungsmittel bei der Hydrolyse Methanol, Ethanol, n- und i-Propanol, n-und i-Butanol oder n-Pentanol verwendet wird.

6. Verfahren nach Anspruch 4 oder 5,
**dadurch gekennzeichnet,**
daß man die Hydrolyse mit Wasserüberschuß durchführt.

7. Verfahren nach einem oder mehreren der Ansprüche 4 bis 6,
**dadurch gekennzeichnet,**
daß der (an)gelierten Reaktionsmischung ein linearer oder verzweigter Alkohol mit 4 bis 12 C-Atomen, Toluol oder o-, m-, p-Xylol, einzeln oder im Gemisch zugesetzt wird.

8. Verfahren nach einem oder mehreren der Ansprüche 4 bis 7,
**dadurch gekennzeichnet,**
daß ein Teil oder auch die Gesamtmenge des bei oder nach Gelierungsbeginn zuzusetzenden weitgehend wasserunlöslichen Lösungsmittels schon in der Hydrolysestufe neben dem dort verwendeten Lösungsmittel eingesetzt wird.

9. Verfahren nach einem oder mehreren der der Ansprüche 4 bis 8,
**dadurch gekennzeichnet,**
daß man Gelierung und Formung bei Normaldruck oder einem Überdruck, welcher der Summe der Partialdrucke der Komponenten der Reaktionsmischung bei der jeweils angewandten Temperatur entspricht, durchführt.

10. Verfahren nach einem oder mehreren der Ansprüche 4 bis 9,
**dadurch gekennzeichnet,**
daß zur Gewinnung vernetzter Organopolysiloxanaminverbindungen das Aminoorganosilan separat geliert, mit dem weitgehend wasserunlöslichen Lösungsmittel homogenisiert und der oder die Vernetzer dem Homogenisat zugesetzt werden.

11. Verfahren nach einem oder mehreren der Ansprüche 4 bis 9,
**dadurch gekennzeichnet,**
daß zur Gewinnung vernetzter Organopolysiloxanaminverbindungen das Aminorganosilan und der oder die Vernetzer 5 Minuten biz zu 24 Stunden ohne oder unter Verwendung eines Lösungsmittel nach Anspruch 5, in Gegenwart von 1 bis 30 Mol % der zur vollständigen Hydrolyse stöchiometrich erforderlichen Menge Wasser, gegebenenfalls unter Zusatz eines Kondensationskatalysators, vorkondensiert.

12. Verfahren zur Nachbehandlung der nach einem oder mehreren der Ansprüche 4 bis 11 erhaltenen, aber nicht getemperten geformten Organosiloxanaminverbindungen,
**dadurch gekennzeichnet,**
daß der in Form von Kugeln ausgebildete Feststoff in Anwesenheit mindestens der Komponente Wasser der flüssigen Phase als Dampf oder Flüssigkeit, einer Temperaturbehandlung während einer Stunde bis zu einer Woche bei Temperaturen von 50 bis 300° C unterworfen wird.

13. Verwendung der nach einem oder mehreren der Ansprüche 4 bis 12 erhältlichen geformten polymeren tertiären und sekundären Amine zur Entfernung von Säuren aus Flüssigkeiten und Gasen.

14. Verwendung der nach einem oder mehreren der Ansprüche 4 bis 12 erhältlichen geformten polymeren tertiären und sekundären Amine zur Adsorption von gasförmigen organischen Verbindungen, vorzugsweise zur Adsorption von organischen Lösungsmitteln.

## Claims

1. Spherical polymeric, optionally cross-linked, tertiary or secondary organosiloxanamine compounds consisting of units of the general formula

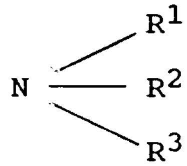

(I)

wherein $R^1$ and $R^2$ are identical or different and denote a group corresponding to the general formula

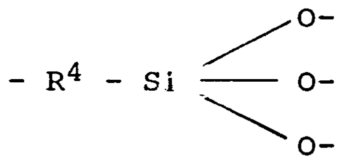

(II)

and the nitrogen atoms in (I) are attached to the silicon atoms in (II) by the groups $R^4$ and $R^4$ stands for an alkylene group having 1 to 10 carbon atoms, a cycloalkylene group having 5 to 8 carbon atoms or a unit corresponding to the general formula

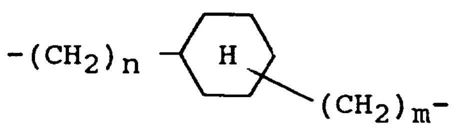

or

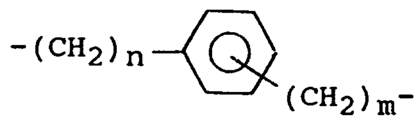

wherein n stands for a number from 1 to 6 and indicates the number of methylene groups attached to the nitrogen and m stands for a number from 0 to 6, and the free valences of the oxygen atoms attached to the silicon atom are saturated, as in silica structures, by silicon atoms of other groups of formula (II) and/or the metal atoms of one or more of the following cross-linking bridging members:

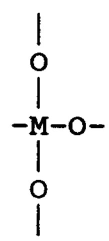

or

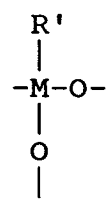

or

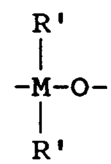

or

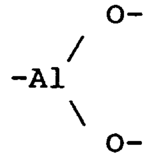

or

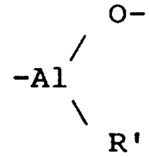

wherein M denotes a silicon, titanium or zirconium atom and R' stands for a straight chain or branched alkyl group having 1 to 5 carbon atoms and the ratio of silicon atoms from the groups corresponding to the general formula (II) to the metal atoms in the bridging members is from 1 : 0 to 1 : 10 and $R^3$ is the same as $R^1$ and $R^2$ or denotes hydrogen, a straight chain or branched alkyl group having 1 to 10

carbon atoms, a cycloalkyl group having 5 to 8 carbon atoms or the benzyl group,
with a diameter of from 0.01 to 3.0 mm, a specific surface area of up to 1000 $m^2$/g, a specific pore volume of up to 6.0 ml/g and a bulk density of from 50 to 1000 g/l.

**2.** Shaped polymeric organosiloxanamine compounds according to Claim 1, characterised in that $R^4$ is a straight chain or branched alkylene group.

**3.** Shaped polymeric organosiloxanamine compounds according to Claim 1 or 2, consisting of units of the formula

$N[CH_2CH_2CH_2SiO_{3/2}]_3$

or

$HN[CH_2CH_2CH_2SiO_{3/2}]_2$ .

**4.** A process for the preparation of the shaped polymeric organosiloxanamine compounds according to one or more of Claims 1 to 3, characterised in that a secondary or tertiary aminosilane corresponding to the general formula

$R^5$
/
N – $R^6$ (III)
\
$R^7$

wherein $R^5$ and $R^6$ are identical or different and denote a group corresponding to the general formula

$- R^4 - Si(OR^8)_3$ (IV)

$R^4$ has the same meaning as in formula (II),
$R^8$ is a straight chain or branched alkyl group having 1 to 5 carbon atoms and
$R^7$ is identical to $R^5$ and $R^6$ or denotes hydrogen, a straight chain or branched alkyl group having 1 to 10 carbon atoms, a cycloalkyl group having 5 to 8 carbon atoms or the benzyl group,
is dissolved in a conventional solvent which is substantially water-miscible but dissolves amino-organosilane and cross-linking agents,
optionally after the addition of one or more cross-linking agents corresponding to the general formula

$M(OR)_{2-4}R'_{0-2}$ or $Al(OR)_{2-3}R'_{0-1}$

wherein M stands for a silicon, titanium or zirconium atom,
R' stands for a straight chain or branched alkyl group having 1 to 5 carbon atoms and the ratio of silicon atoms from the groups corresponding to the general formula (IV) to the metal atoms in the cross-linking agents is from 1 : 0 to 1 : 10, a quantity of water at least sufficient for complete hydrolysis and condensation is added to the solution with stirring, the reaction mixture is left to gel with continued stirring at a particular temperature in the range of from room temperature to 200 °C under the proviso that at the onset of gelling or up to one hour thereafter, from 10 to 2000% by weight, preferably from 50 to 500% by weight, based on the total quantity of aminoorganosilane (III) and optionally crosslinking agents, of a conventional solvent which is substantially water-insoluble but dissolves the (partly) gelled reaction mixture, are added and the reaction mixture is homogenised, from 10 to 2000 % by weight, preferably from 50 to 1000 % by weight, of water, based on the total quantity of aminoorganosilane and optionally cross-linking agent, are added to the viscous homogenate either immediately or within a period of up to one hour, optionally with raising of the originally adjusted temperature, the organic phase, which now contains siloxane, is dispersed in the liquid diphasic system and the solid which is obtained in the form of spheres is separated from the liquid phase after a sufficient reaction time for

this purpose at a temperature from room temperature to 200 ° C and is then optionally extracted, dried under a protective gas or in a vacuum at a temperature from room temperature to 250 ° C and tempered at temperatures from 150 to 300 ° C for 1 to 100 hours and/or classified.

**5.** A process according to Claim 4, characterised in that the solvent used for hydrolysis is methanol, ethanol, n- and i-propanol, n- and i-butanol or n-pentanol.

**6.** A process according to Claim 4 or 5, characterised in that hydrolysis is carried out with an excess of water.

**7.** A process according to one or more of Claims 4 to 6, characterised in that a straight chain or branched alcohol having 4 to 12 carbon atoms, toluene or o-, m- or p-xylene are added, singly or as mixture, to the (partly) gelled reaction mixture.

**8.** A process according to one or more of Claims 4 to 7, characterised in that part or all of the substantially water-insoluble solvent to be added at or after the onset of gelling is already put into the process at the stage of hydrolysis in addition to the solvent used there.

**9.** A process according to one or more of Claims 4 to 8, characterised in that gelling and shaping are carried out at normal pressure or at an excess pressure corresponding to the sum of the partial pressures of the components of the reaction mixture at the temperature employed.

**10.** A process according to one or more of Claims 4 to 9, characterised in that for obtaining cross-linked organopolysiloxanamine compounds, the aminoorganosilane is gelled separately and homogenized with the substantially water-insoluble solvent and the one or more than one cross-linking agent is added to the homogenate.

**11.** A process according to one or more of Claims 4 to 9, characterised in that for obtaining cross-linked organopolysiloxanamine compounds, the aminoorganosilane and the one or more than one cross-linking agent are precondensed for 5 minutes to 24 hours with or without a solvent according to Claim 5 in the presence of from 1 to 30 mol-% of the quantity of water stoichiometrically required for complete hydrolysis, optionally with the addition of a condensation catalyst.

**12.** A process for the after-treatment of the shaped organosiloxanamine compounds which have been obtained according to one or more of claims 4 to 11 but have not been tempered, characterised in that the solid obtained in the form of spheres is subjected to a temperature treatment for one hour to one week at temperatures of from 50 to 300 ° C in the presence of at least the component water of the liquid phase in the form of steam or liquid.

**13.** Use of the shaped polymeric tertiary and secondary amines obtainable according to one or more of Claims 4 to 12 for the removal of acids from liquids and gases.

**14.** Use of the shaped polymeric tertiary and secondary amines obtainable according to one or more of Claims 4 to 12 for the adsorption of gaseous organic compounds, preferably for the adsorption of organic solvents.

**Revendications**

**1.** Composés organosiloxanamines tertiaires ou secondaires, éventuellement réticulés polymères, en forme de sphères qui sont constitués de motifs de formule générale

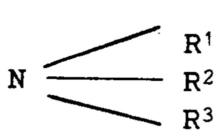

(I)

dans laquelle $R^1$ et $R^2$ sont, semblables ou différents et représentent un groupe de formule générale :

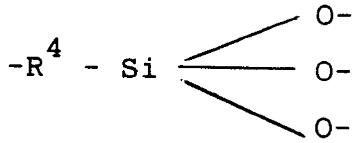

(II)

dans laquelle les atomes d'azote dans (I) sont liés par l'intermédiaire du reste $R^4$ avec les atomes de silicium dans (II) et $R^4$ représente un radical alcoylène ayant de 1 à 10 atomes de carbone, un radical cycloalcoylène ayant de 5 à 8 atomes de carbone ou un motif de formule générale :

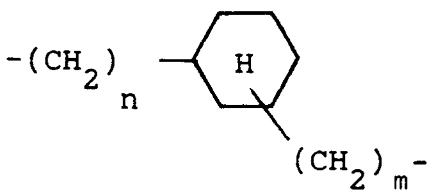

ou

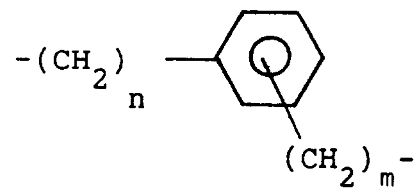

dans lequel n est un nombre de 1 à 6 et indique le nombre des radicaux méthylène qui se tiennent à l'azote, et m est un nombre de 0 à 6,
et dans laquelle les valences libres des atomes d'oxygène liés à l'atome de silicium comme pour les squelettes d'acide silicique, sont dé-saturés par des atomes de silicium, d'autres groupes de formule (II) et/ou avec les atomes métalliques d'un ou de plusieurs membres de ponts qui réticulent :

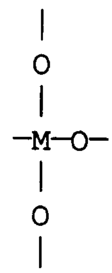

ou

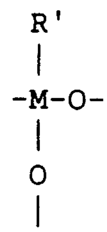

ou

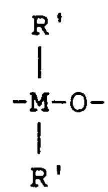

ou respectivement

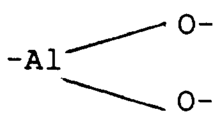

ou

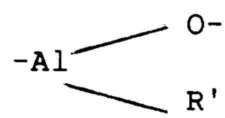

dans laquelle M est un atome de silicium, de titane ou de zirconium et R' est un radical alcoyle ayant de 1 à 5 atomes de carbone, linéaire ou ramifié et le rapport des atomes de silicium dans les groupes de formule générale (II) aux atomes métalliques dans les membres des ponts, s'élève de 1 : 0 à 1 : 10, et dans laquelle $R^3$ est identique à $R^1$ et $R^2$, ou est de l'hydrogène, un radical alcoyle linéaire ou ramifié ayant de 1 à 10 atomes de carbone, un radical cyclo-alcoyle consistant en 5 à 8 atomes de carbone ou le radical benzyle, ayant un diamètre de 0,01 à 3,0 mm, une surface spécifique jusqu'à 1000 $m^2/g$, un volume de pores spécifique jusqu'à 6,0 ml/g ainsi qu'une densité apparente de 50 à 1000 g/l.

**2.** Composés d'organosiloxanamines polymères, ayant une forme déterminée, selon la revendication 1, caractérisés en ce que $R^4$ est un radical alcoylène linéaire ou ramifié.

**3.** Composés d'organosiloxanamines polymères, ayant une forme déterminée, selon les revendications 1 et 2, constitués par des motifs

$N[CH_2CH_2CH_2SiO_{3/2}]_3$

ou

$HN[CH_2CH_2CH_2SiO_{3/2}]_2$

**4.** Procédé d'obtention des composés d'organosiloxanamines polymères ayant une forme déterminée selon l'une ou plusieurs des revendications 1 à 3, caractérisé en ce que l'on dissout un aminosilane secondaire ou un aminosilane tertiaire de formule générale :

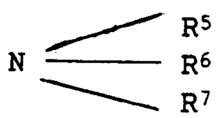

(III)

dans laquelle $R^5$ et $R^6$ sont identiques ou différents et représentent un radical de formule générale :

$- R^4 - Si(OR^8)_3$ (IV)

dans laquelle $R^4$ a la même signification que dans la formule (II) et $R^8$ est un radical alcoyle linéaire ou ramifié ayant de 1 à 5 atomes de carbone et $R^7$ identique à $R^5$ et $R^6$ ou de l'hydrogène, est un radical alcoyle linéaire ou ramifié ayant de 1 à 5 atomes de carbone un radical cycloalcoyle composé de 5 à 8 atomes de carbone ou un radical benzyle éventuellement après addition d'un ou plusieurs agents réticulants de formule générale :

$M(OR)_{2-4} R'_{0-2}$ ou $Al(OR)_{2-3} R'_{0-1}$

dans laquelle M est un atome de silicium, de titane ou de zirconium, R' est un radical alcoyle linéaire ou ramifié ayant de 1 à 5 atomes de carbone et le rapport des atomes de silicium choisis dans les groupes de formule générale (II), aux atomes métalliques dans les agents de réticulation, s'élève à 1 : 0 à 1 : 10, dans un solvant usuel, largement miscible à l'eau, mais qui dissout l'agent de réticulation et l'aminoorganosilane, l'on ajoute à la solution sous agitation une quantité d'eau au moins suffisante pour l'hydrolyse complète et la condensation, on fait gélifier le mélange réactionnel sous agitation renouvelée, à une température déterminée dans une zone allant de la température ambiante à 200 °C sous la condition que soit additionné lors du début de la gélification ou jusqu'à une heure après, avec 10 à 2000 % en poids - de préférence 50 à 500 % en poids - rapportée à la quantité totale d'amino-organosilane (III) et le cas échéant, de l'agent de réticulation, un agent solvant usuel mais qui dissout le mélange réactionnel gélifié, largement insoluble dans l'eau et soit homogénéisé et l'on ajoute de l'eau au produit homogénéisé visqueux immédiatement ou dans l'espace allant jusqu'à une heure, le cas échéant, sous élévation de la température ajustée à l'origine, 10 à 2000 % en poids - de préférence 50 à 1000 % en poids - rapporté à la quantité totale d'aminoorganosilane et le cas échéant d'agent de réticulation, l'on disperse la phase organique qui contient maintenant le siloxane dans le système à deux phases liquide et l'on sépare la substance solide qui se forme sous la forme de sphères après un temps de réaction suffisant pour cela, à une température allant de la température ambiante à 200 °C, de la phase liquide et ensuite l'on extrait le cas échéant, on sèche à une température allant de la température ambiante à 250 °C le cas échéant sous gaz protecteur ou sous vide, et on recuit et/ou classifie pendant 1 à 100 heures à des températures de 150 ° à 300 °C.

**5.** Procédé selon la revendication 4, caractérisé en ce que, comme solvant pour l'hydrolyse, on utilise du méthanol, de l'éthanol, du n- ou du i-propanol, du n- ou du i-butanol ou du n-pentanol.

**6.** Procédé selon la revendication 4 ou 5, caractérisé en ce que l'on effectue l'hydrolyse avec un excès d'eau.

**7.** Procédé selon une ou plusieurs des revendications 4 à 6, caractérisé en ce qu'au mélange réactionnel gélifié, on ajoute un alcool linéaire ou ramifié ayant de 4 à 12 atomes de carbone, du toluène ou du o-, m-, p-xylène isolément ou en mélange.

**8.** Procédé selon une ou plusieurs des revendications 4 à 7, caractérisé en ce qu une partie ou également la totalité du solvant largement insoluble dans l'eau qui doit être ajouté lors ou après le commencement de la gélification est mise en oeuvre déjà dans l'étape d'hydrolyse à côté du solvant utilisé là.

**9.** Procédé selon une ou plusieurs des revendications 4 à 8, caractérisé en ce que l'on exécute la gélification et la mise en forme à pression normale ou sous une surpression, laquelle correspond à la somme des pressions partielles des composants du mélange réactionnel pour la température correspondante utilisée.

**10.** Procédé selon une ou plusieurs des revendications 4 à 9, caractérisé en ce que l'aminoorganosilane est gélifié séparément pour l'obtention d'organopolysiloxanamines réticulées, en ce que l'on homogénéise avec le solvant largement insoluble dans l'eau et en ce que l'agent de réticulation ou les agents de réticulation sont ajoutés au produit d'homogénéise.

**11.** Procédé selon une ou plusieurs des revendications 4 à 9, caractérisé en ce que, pour l'obtention d'organopolysiloxanamines réticulées, l'amino-organosilane et le ou les agents de réticulation sont précondensés pendant 5 minutes jusqu'à 24 heures, sans ou avec utilisation d'un solvant comme défini à la revendication 5, en présence de 1 à 30 mol % de la quantité d'eau nécessaire stoechiométriquement pour l'hydrolyse complète, le cas échéant en ajoutant un catalyseur de condensation.

**12.** Procédé de post-traitement des composés organosiloxanaminés mis en forme mais non recuits, obtenus selon une ou plusieurs des revendications 1 à 11, caractérisé en ce que la substance solide façonnée sous forme de sphères est soumise à un traitement thermique pendant une heure à une semaine à des températures allant de 50 à 300 °C, en présence - au moins - du composant eau de la phase liquide sous la forme de vapeur ou de liquide.

**13.** Utilisation des amines tertiaires et secondaires polymères, mises en forme, obtenues selon une ou plusieurs des revendications 4 à 12, pour l'élimination des acides dans les liquides et les gaz.

**14.** Utilisation des amines secondaires et tertiaires, polymères mises en forme, obtenues selon une ou plusieurs des revendications 4 à 12, pour l'adsorption de composés organiques gazeux, de préférence pour l'adsorption de solvants organiques.